# EUROPEAN PATENT APPLICATION

(11) **EP 2 065 135 A1**
(43) Date of publication of application: **03.06.2009**
(21) Application number: 07022952.1
(22) Date of filing: 27.11.2007
(51) Int. Cl.: B25B 13/46, F16D 41/08

(54) **One-way actuator**

(71) Applicant: Chen, Chun-Lung, Tucheng City T'ai pei 236 (TW); Chen, Yu-Sheng, Tucheng City T'ai pei 236 (TW); Chen, Chien-Lin, Tucheng City T'ai pei 236 (TW)
(72) Inventor: Chen, Chun-Lung, Tucheng City T'ai pei 236 (TW); Chen, Yu-Sheng, Tucheng City T'ai pei 236 (TW); Chen, Chien-Lin, Tucheng City T'ai pei 236 (TW)
(74) Representative: Urner, Peter

(57) **Abstract**

An actuator for providing functions of one-way actuation and shiftless rotation includes a main body, two rolling elements, and a recovery apparatus, in which an accommodating space is arranged in the main body and has two frictional faces corresponding to each other with a tapered distance between them. Initially, two rolling elements are arranged at one side of the accommodating space of a wider spacing distance and then make a rolling contact with two frictional faces respectively to be displaced toward a narrower side of the accommodating space through the recovery apparatus, so that an aforementioned one-way actuator is thus constructed.

## Description

### BACKGROUND OF THE INVENTION

### Field of the Invention

The present invention generally relates to a mechanical member, in particular, to a one-way actuator for providing an actuation in a single direction.

### Description of Prior Art

Today, rotational mechanism has been popularly applied to various one-way and two-way (capable of switching direction) rotationally operational products, for example, ratchet wrench, angle-adjusting axle for lamp rod, rotationally angle-positioning axle for chair back and chair seat, and so forth. According to prior arts, these rotational mechanisms are all composed of ratchet or ratch cooperated with positioning elements. Or, they can also adopt a corresponding composition of recession and bump. Of course, an operational composition of elastic element and steel ball can also be adopted to obtain an operation and position of one-way or two-way rotation. However, certain sectional limitation for rotation does exist in these rotational mechanisms, because a rotational position must be cooperated in a rotational operation. In other words, it is impossible to obtain a rotational operation without sectioning process. Since of this sectional limitation, the accuracy of a rotational operation is thereby limited correspondingly.

In addition, different shiftless rotational mechanisms had been disclosed in Taiwan (ROC) Utility Model No. 122187, namely, "Improving Structure for Shiftless Ratchet Wrench". In this case, an inclined trough space is fixed by a main body and is cooperated with a non-elastic assembly to form a set of triangular compositing element capable of being dismantled and reassembled quickly, such that the goal of a one-way actuation may be achieved. Furthermore, there is no any toothed object in this elemental set, so a shiftless working manner is possible, without any sectional phenomenon when the action is executed repeatedly. However, after the triangle compositing element set is interacted with the fixed inclined trough space, a gigantic wedging reacting force will be generated to cause a deadly clamping problem. So, it is still impossible to achieve a really smooth shiftless rotational operation.

Accordingly, aiming to solve aforementioned shortcomings, after a substantially devoted study, in cooperation with the application of relatively academic principles, the inventor has at last proposed the present invention that is designed reasonably to possess the capability to improve the prior arts significantly.

### SUMMARY OF THE INVENTION

The invention is mainly to provide a one-way actuator, which applies two rolling elements to provide a frictional contact to a driver. At the beginning of an operation, the driver enters into two rolling elements for bringing along two rolling elements to act an inner wall of an accommodating space to generate a wedge's reacting force. Thereby, the frictional force between two contacted faces is enlarged to against a gliding phenomenon. In other words, the driver and two rolling elements can advance in the accommodating space without gliding but only rolling. When the external force disappears, the wedge's reacting force disappears subsequently, so the driver can be moved between two rolling elements to thereby provide a one-way and shiftless rotational function.

The invention is to provide a one-way actuator, including: a main body, two rolling elements, and a recovery apparatus, in which an accommodating space is arranged in the main body and has two frictional faces corresponded to each other therein. The spacing distance between two frictional faces is varied from wide one to narrow one. Initially, two rolling elements are located at one side of two frictional faces with a larger spacing distance, and then they can respectively make a rolling contact with two frictional faces to be moved to a narrower side of two frictional faces through the recovery apparatus. Thereby, an aforementioned one-way actuator is constructed.

### BRIEF DESCRIPTION OF DRAWING

The features of the invention believed to be novel are set forth with particularity in the appended claims. The invention itself, however, may be best understood by reference to the following detailed description of the invention, which describes a number of exemplary embodiments of the invention, taken in conjunction with the accompanying drawings, in which:
Fig. 1 is an illustration of the invention;
Fig. 2 is an action illustration showing a driver entering into the invention;
Fig. 3 is an illustration showing the invention keeping a driver from being withdrawn;
Fig. 4 is an explosively perspective illustration showing the invention applied in a wrench;
Fig. 5 is an assembled perspective illustration showing the invention applied in a wrench;
Fig. 6 is an assembled sectional illustration showing the invention applied in a wrench;
Fig. 7 is an illustration showing the invention applied in a one-way action of a wrench;
Fig. 8 is an illustration showing the invention applied in another one-way action of a wrench;
Fig. 9 is an assembled sectional illustration showing another embodiment of the invention applied in a wrench;
Fig. 10 is an explosively sectional illustration showing a further embodiment of the invention applied in a wrench;
Fig. 11 is an assembled sectional illustration showing a further another embodiment of the invention applied in a wrench;
Fig. 12 is a perspective outer appearance illustration showing the invention applied in a flywheel;
Fig. 13 is a using status illustration showing the invention pivoted between two supports;
Fig. 14 is a using status illustration showing the invention pivoted between a chair back and a chair seat.

### DETAILED DESCRIPTION OF THE INVENTION

In cooperation with attached drawings, the technical contents and detailed description of the present invention are described thereinafter according to a number of preferable embodiments, being not used to limit its executing scope. Any equivalent variation and modification made according to appended claims is all covered by the claims claimed by the present invention.

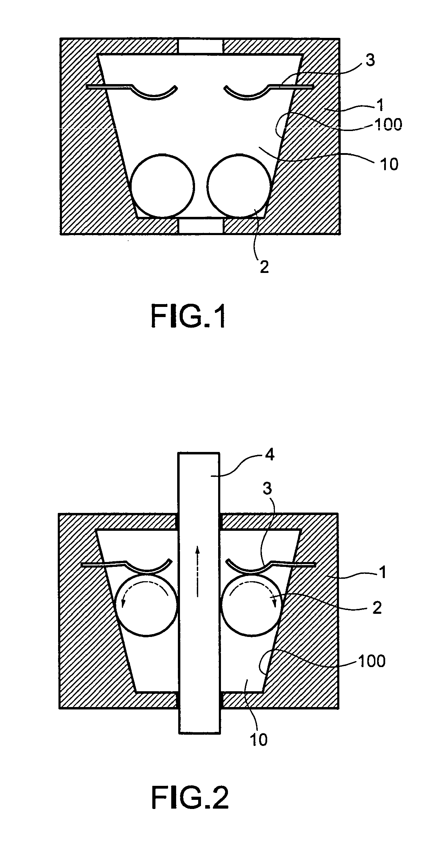

The invention is to provide a one-way actuator, the operational principle of which is as shown in Fig. 1. The one-way actuator includes: a main body 1, two rolling elements 2, and a recovery apparatus 3, in which an accommodating space 10 is arranged in the main body 1 and has two frictional faces 100 respectively arranged at two inner walls therein and corresponded to each other. Initially, aforementioned two rolling elements 2 are placed in the accommodating space 10 and respectively make a rolling contact with two frictional faces 100, which may be an inclined faces and are separated from each other from a wide distance to a narrow distance. Aforementioned recovery apparatus 3 is located at one side of two frictional faces 100 with a wider spacing distance for providing two rolling elements 2 to be able to be displaced toward another side of two frictional faces 100 with a narrower spacing distance. In addition, two rolling elements 2 may respectively be a ball or a roller. Meanwhile, the recovery apparatus 3 may respectively abutted against two elastic elements on two rolling elements (for example, leaf spring or spring), or magnetic element (such as, magnet).

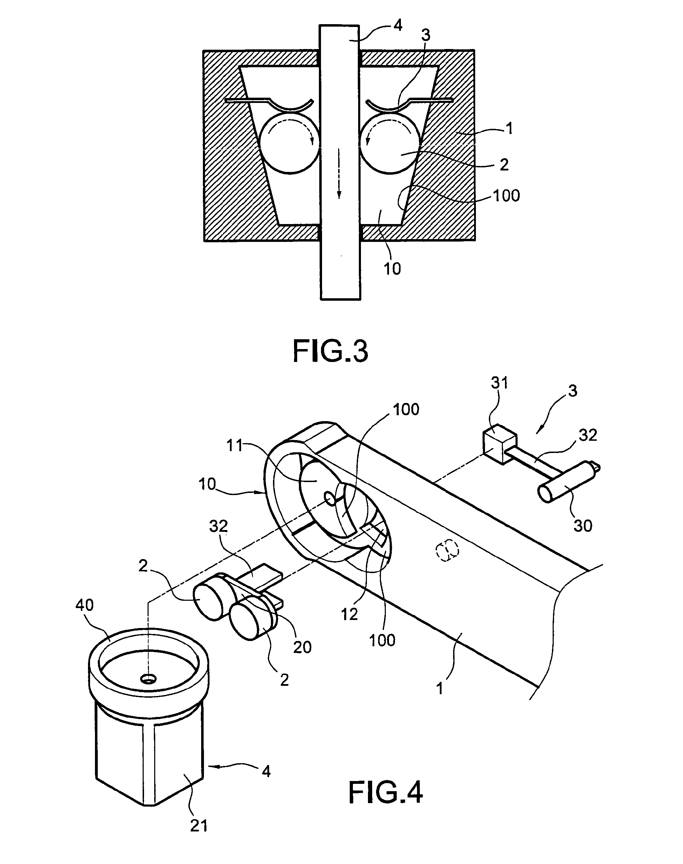

Accordingly, as shown in Fig. 2, after a driver 4 enters into the accommodating space through the gap between two rolling elements 2, the driver 4 can push two rolling elements 2 respectively toward two frictional faces 100 by means of a thrusting operation. Since the distance between two rolling elements 2 may be enlarged by being rolled on two frictional faces 100, the driver 4 thereby enters into the gap between two rolling elements 2 smoothly. Again, as shown in Fig. 3, if the driver 4 is withdrawn in reverse direction, then another frictional force will be generated between two rolling elements 2 and the driver 2 to make the former rolled in reverse direction, thereby their spacing distance being shortened in a way, such that the frictional force between two rolling elements 2 and the driver 4 is enlarged to achieve an effect of preventing a reverse withdrawal, thereby, a one-way actuator according to the invention being successfully constructed.

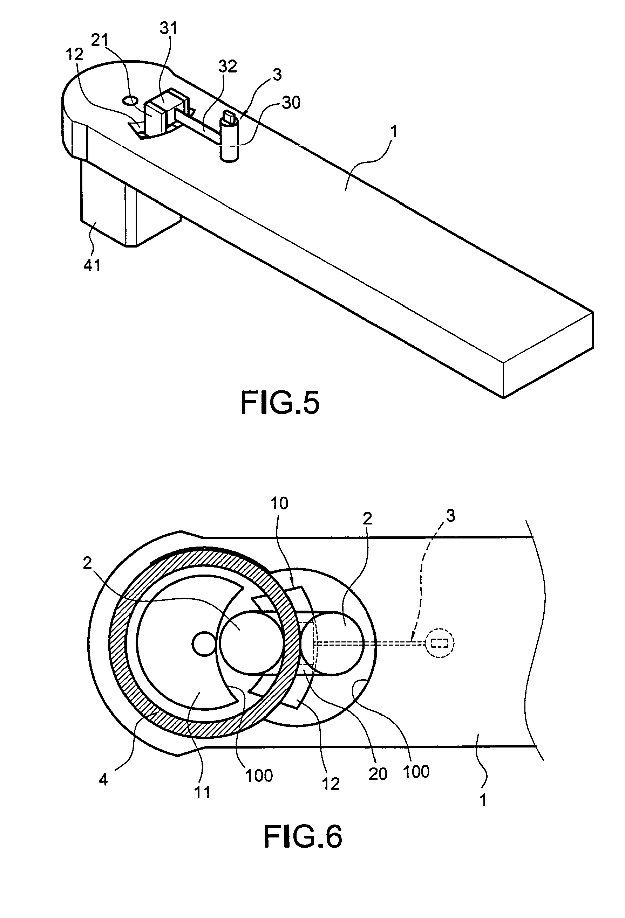

Furthermore, please refer to Fig. 4 and Fig. 5, which show the invention to be able to be applied in a wrench. In this case, the main body 1 is shown as a wrench configuration, on one side face of which the accommodating space 10 is formed. As shown in Fig. 6, the accommodating space 10 is constructed by two circular troughs partially overlapped to each other, one of which is arranged on a crescent frictional block 11, a crescent recessing part of which is recessed inwardly to form one frictional face 100, while another frictional face 100 is located on an inner wall face of another corresponding trough is a way, such that two frictional faces 100 may respectively construct an arc face recessed inwardly.

Two rolling elements 2 are arranged in the accommodating space 10 of the main body 1 and are placed at one side of the frictional block 11 in a way, such that two rolling elements 2 are located between two frictional faces 100 and are shown as an interspacing arrangement by being pivoted on a base 20 positioned in the accommodating space 10. The base 20, relative to another side of two rolling elements, is arranged a joint part 21 and is further arranged a switching trough 12 penetrating another side face of the main body 1 in corresponding to the accommodating space 10 of the main body 1, while the joint part 21 is located at the switching trough 12 and can be moved in a left-and-right direction therein for being able to be connected to the recovery apparatus 3.

In this preferable embodiment, the recovery apparatus 3 has a positioning rod 30, a connecting block 31, and a flexible piece 32 arranged between the positioning rod 30 and the connecting block 31, in which the positioning rod 30 is pivoted to the main body 1 for a positioning purpose. Through the flexible piece 32, the connecting block 31 may be extended to the switching trough 12 and combined to the joint part 21.

The driver 4 has a driving part 40 shown as a circular configuration and a forced part 41 located at another side of the driving part 40, which is constructed as a circular surrounding wall to be cooperatively arranged in the accommodating space 10 of the main body 1 and located on the frictional block 11 in a way, such that it can be rotated freely. In the meantime, the driving part 40 can make a frictional contact with two rolling elements 2 through a rolling movement by passing its surrounding wall between two rolling elements 2. In addition, the forced part 21 of the driver 4 is shown as a non-circular configuration, thus that it may be driven to rotate by an external force.

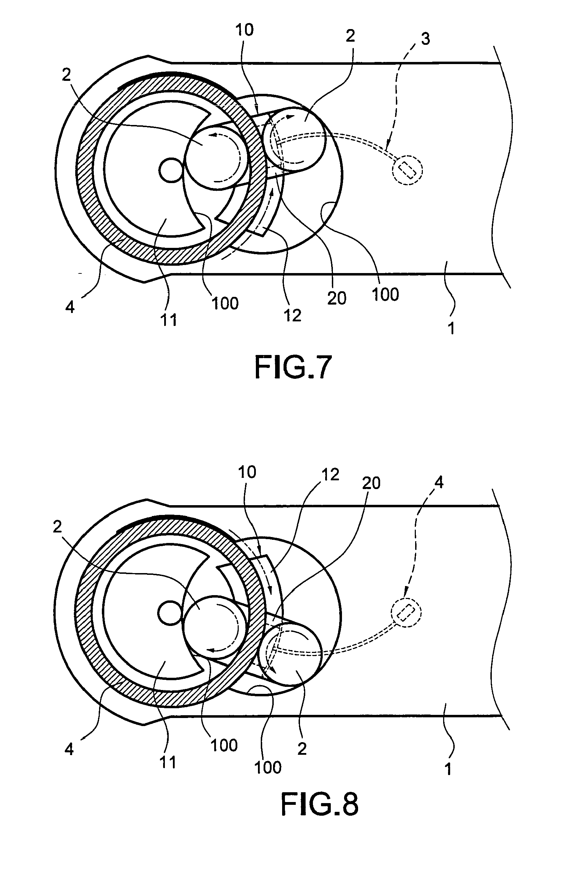

Accordingly, as shown in Fig. 7 and Fig. 8, since the recovery apparatus 3 may adjust two rolling elements 2 to be displaced on the driving part 20, when two rolling elements 2 are adjusted to one side of the switching trough 12 by the recovery trough 3 as shown in Fig. 7, a frictional contact is formed between two rolling elements 2 and the driving part 20, making the former abutted against two frictional faces 100 formed as arc in a way, such that the driver 4 generates an anti-rotational effect in a counterclockwise direction. It means that the wrench can only be rotated in a clockwise direction, if it is driven by a force. Again, as shown in Fig. 8, when two rolling elements 2 are adjusted to another side of the switching trough 12 by the recovery trough, a frictional contact is formed between two rolling elements 2 and the driving part 20 in a same way, such that the former is respectively abutted against two frictional faces 100 formed as arc. At this time, since two rolling elements 2 bias the switching trough 12 in a different position, the driver 4 may generate an anti-rotational effect in clockwise direction, thereby, the wrench being able to be rotated only in counterclockwise direction when a force is applied. Therefore, a one-way actuator of the invention not only can be applied to an instrument, such as, a wrench, but also can provide a two-way switch to change the driving direction without any limitation of sectional rotation by switching the positions of two rolling elements 2 by the recovery apparatus 3.

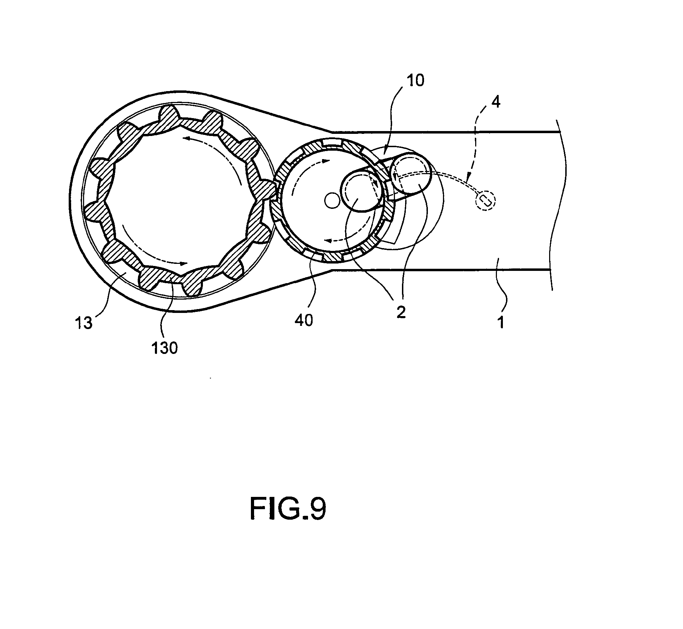

Furthermore, as shown in Fig. 9, it is an assembled sectional illustration showing another preferable embodiment of the invention applied in a wrench. In this case, a ratchet trough 13 further arranged in a main body 1 is adjacent to aforementioned driver 4 and is communicated adjacently to an accommodating space 10. A ratchet 130 arranged in the ratchet trough 13 is additionally meshed with a driving part 40, of aforementioned driver 4, formed as a gear configuration. The invention can be thereby applied to a wrench and cooperatively actuated therewith.

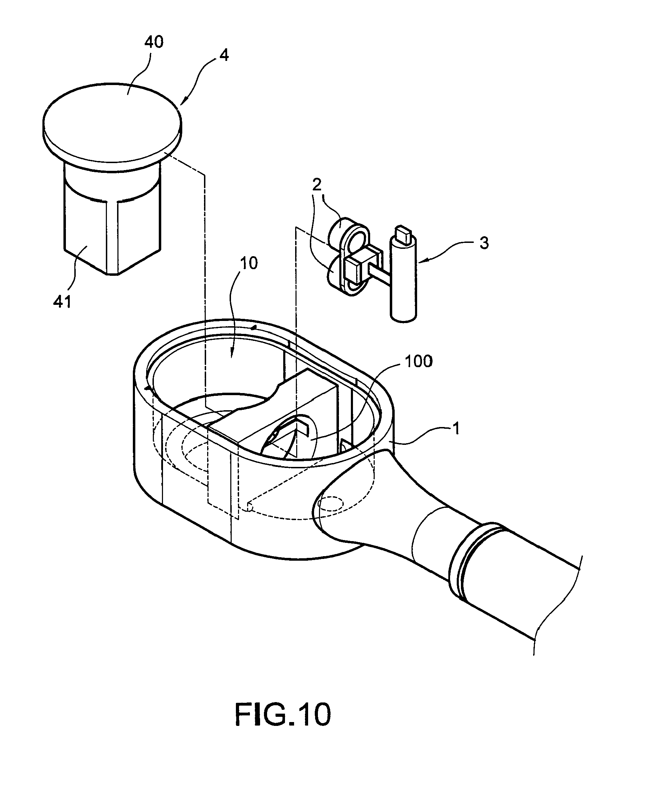

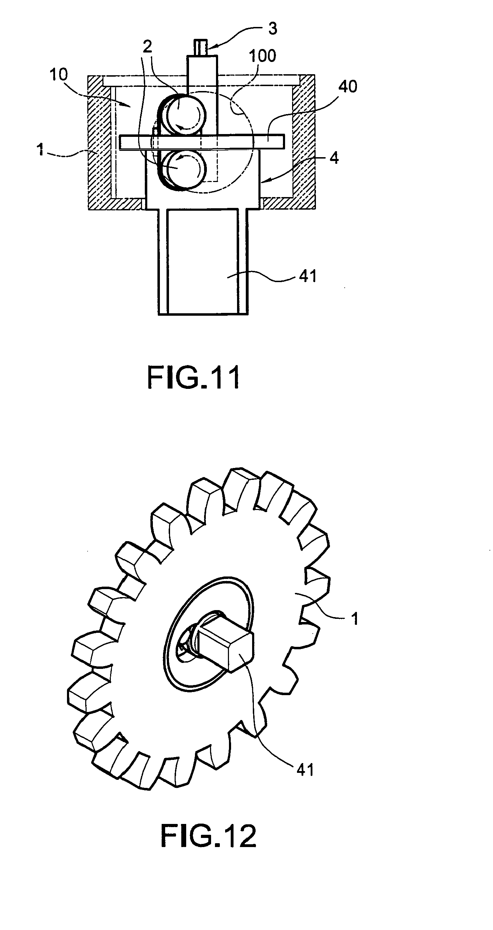

Again, as shown in Fig. 10 and Fig. 11, they are respectively an explosively perspective illustration and an assembled sectional illustration of a further preferable embodiment of the invention applied in a wrench. In this case, a driving part 40 of aforementioned driver 4 is shown as a circular plate, which may be clamped by two rolling elements 2 to thereby be able to be glided in a frictionally contacting state.

In a further another preferable embodiment, as shown in Fig. 12, a main body 1 of the invention may be shown as a flywheel configuration, a circumference of which may be formed as a gear shape, thus that the main body 1 can be meshed with other gear set and cooperatively actuated therewith.

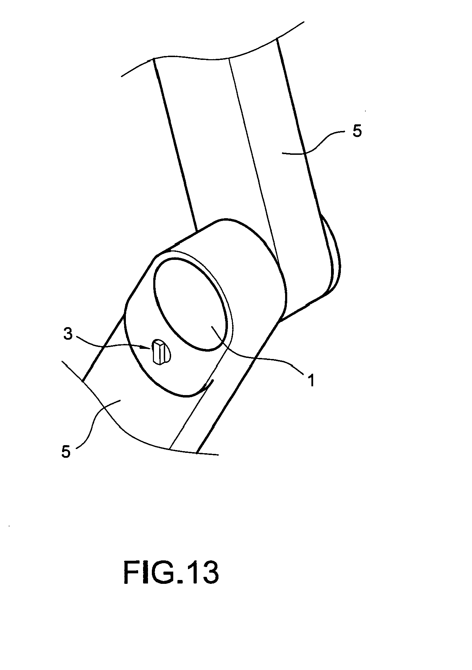

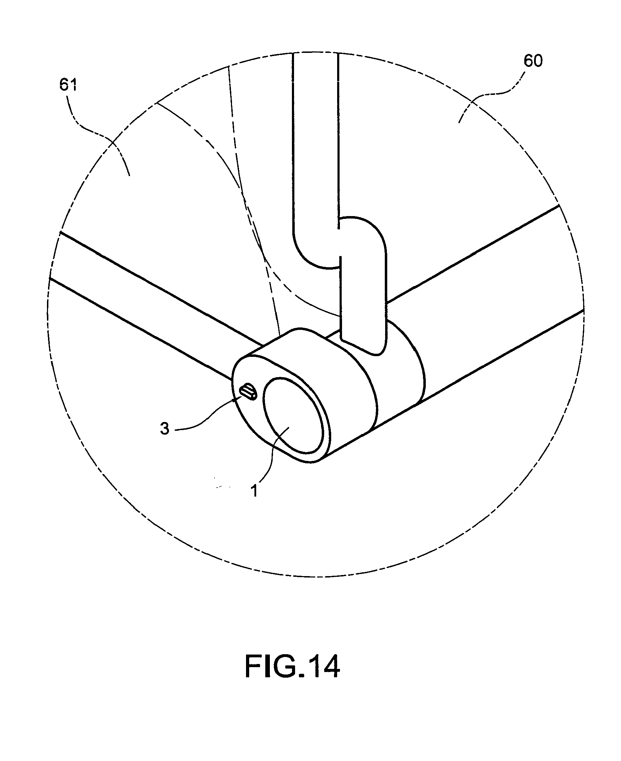

In addition, as shown in Fig. 13, the invention can also be applied to a pivoting structure between two supports 5. Or, as shown in Fig. 14, the invention is applicable to a chair's pivoting structure arranged between a back 60 and a seat 61 thereof. In other words, the invention can provide a positioning effect of shiftless rotation to a pivoting structure.

Summarizing aforementioned description, the invention is an indispensable product of novelty indeed, which may positively reach the expected usage objective for solving the drawbacks of the prior arts, and which extremely possesses the innovation and progressiveness to completely fulfill the applying merits of new type patent, according to which the invention is thereby applied. Please examine the application carefully and grant it as a formal patent for protecting the rights of the inventor.

However, the aforementioned description is only a preferable embodiment according to the present invention, being not used to limit the patent scope of the invention, so equivalently structural variation made to the contents of the present invention, for example, description and drawings, is all covered by the claims claimed thereinafter.

## Claims

1. A one-way actuator, including:
a main body (1), which is arranged an accommodating space (10) therein, having two frictional faces (100) opposite to each other and separated with a tapered distance;
two rolling elements (2), which are placed in the accommodating space (10) and respectively make a rolling contact with each frictional face (100); and
a recovery apparatus (3), which is arranged at a wider side of the frictional faces (100) to displace two rolling elements (2) toward a narrower side of the frictional faces (100).

2. The one-way actuator according to claim 1, further including a driver (4) making a frictional contact between the rolling elements (2).

3. The one-way actuator according to claim 2, wherein the main body (1) is shown as a wrench configuration, at one side face of which the accommodating space (10) is located.

4. The one-way actuator according to claim 3, wherein the frictional faces (100) are both inclined.

5. The one-way actuator according to claim 3, wherein the frictional faces (100) are both arc face recessed inwardly.

6. The one-way actuator according to claim 3, wherein the rolling elements (2) are pivoted to a base (20) and are arranged with a separating distance, and the base (20) is also located in the accommodating space (10) and is connected to and controlled by the recovery apparatus (3).

7. The one-way actuator according to claim 3, wherein the recovery apparatus (3) includes a positioning rod (30), a connecting block (31) and a flexible piece (32) arranged between the positioning rod (30) and the connecting block (31), wherein the positioning rod (30) is pivoted to the main body (1), making the connecting block (31) extended to the base (20) and connected thereto through the flexible piece (32).

8. The one-way actuator according to claim 7, wherein a joint part (21) is arranged at the base (20) in corresponding to another side of the rolling elements (2), and a switching trough (12) penetrating to another side of the main body (1) is arranged in corresponding to the accommodating space (10), and the joint part (21) is located in the switching trough (12) and can be moved in a left-and-right direction therein with a connection to the connecting block (31).

9. The one-way actuator according to claim 3, wherein the driver (4) has a circular driving part (40) and a forced part (41) located at another side of the driving part (40), and the driving part (40) is constructed as a circularly surrounding wall, which is cooperatively pivoted in the accommodating space (10) and is undertaken a frictional contact of rolling type by passing through two rolling elements (2).

10. The one-way actuator according to claim 9, wherein the main body (1) is arranged a ratchet trough (13), in which a ratchet (130) is arranged, and the ratchet (130) is meshed with a driving part (40), of the driver (4), formed as a gear shape.

11. The one-way actuator according to claim 3, wherein the driver (4) has a driving part (40) formed as a circular plate and a forced part (41) located at another side of the driving part (4), and the driving part (40) is cooperatively pivoted in the accommodating space (10) and is undertaken a frictional contact of rolling type by passing through two rolling elements (2).

12. The one-way actuator according to claim 2, wherein the main body (1) is shown as a flywheel configuration, on a circumference of which a gear configuration is formed.

13. The one-way actuator according to claim 1, wherein the recovery apparatus (3) is an elastic element respectively abutted against two rolling elements (2).

14. The one-way actuator according to claim 1, wherein the recovery apparatus (3) is a magnetic element.
